(19) **Europäisches Patentamt**
**European Patent Office**
**Office européen des brevets**

(11) **EP 4 446 371 A1**

(12) # EUROPEAN PATENT APPLICATION
published in accordance with Art. 153(4) EPC

(43) Date of publication:
**16.10.2024 Bulletin 2024/42**

(21) Application number: **23779343.5**

(22) Date of filing: **08.03.2023**

(51) International Patent Classification (IPC):
***C08J 9/16*** *(2006.01)*

(52) Cooperative Patent Classification (CPC):
**C08J 9/16**

(86) International application number:
**PCT/JP2023/008750**

(87) International publication number:
**WO 2023/189316 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.03.2022 JP 2022057433**

(71) Applicant: **KANEKA CORPORATION**
**Osaka 530-8288 (JP)**

(72) Inventors:
• **AMANO Masaki**
**Settsu-shi, Osaka 566-0072 (JP)**
• **NAKAYAMA Kiyotaka**
**Settsu-shi, Osaka 566-0072 (JP)**
• **SAMESHIMA Masahiko**
**Settsu-shi, Osaka 566-0072 (JP)**

(74) Representative: **Hoffmann Eitle**
**Patent- und Rechtsanwälte PartmbB**
**Arabellastraße 30**
**81925 München (DE)**

(54) **POLYCARBONATE-BASED FOAMED PARTICLES AND METHOD FOR PRODUCING SAME**

(57)   Provided are: polycarbonate-based foamed particles that have a relatively large cell diameter and foaming ratio while having a low open cell ratio, exhibit excellent heat-insulating properties, heat resistance, and mechanical strength, and yield an easily moldable molded article with a suitable appearance; and a method for producing the polycarbonate-based foamed particles. The polycarbonate-based foamed particles of the present invention are polycarbonate-based foamed particles containing at least a polycarbonate resin composition, wherein the average cell diameter is more than 300 um and no more than 1000 um, the open cell ratio is 0.1%-30%, the polycarbonate resin composition includes a linear polycarbonate and a branched polycarbonate, and the content of the linear polycarbonate in the polycarbonate resin composition is 60-95 parts by mass with respect to a total of 100 parts by mass of the linear polycarbonate and the branched polycarbonate.

EP 4 446 371 A1

## Description

TECHNICAL FIELD

The present invention relates to polycarbonate-based foamed particles and a method for producing the same.

BACKGROUND ART

Foamed resin molded products are used as cushioning materials and heat insulating materials for automobiles and homes. Examples of methods for producing a foamed resin molded body include a bead method in-mold foam molding method of producing a foamed resin molded product by preparing foamed particles and subjecting the prepared foamed particles to in-mold foam molding. The bead method in-mold foam molding has advantage that shapes and dimensions of the foamed resin molded bodies can be designed freely, and a foamed resin molded product with a high ratio can be easily obtained.

Foamed particles with excellent heat resistance and heat insulation properties are required to be obtained in order to be used as heat insulating materials. In response to such requirement, foamed particles using polycarbonate as a base resin with excellent heat resistance are being considered. Polycarbonate is not only heat resistant but also excellent in mechanical properties, electrical properties, water resistance, chemical resistance, aging resistance, and the like, so it is useful not only as heat insulating materials and cold insulation materials, but also as electrical insulation materials and packaging materials, and can be expected to be applied to various applications. Therefore, various types of polycarbonate-based foamed particles have been developed so far.

For example, Patent Document 1 discloses polycarbonate-based foamed particles having a cell density defined within a specific range and an average cell diameter of 0.003 to 0.2 mm. In the production method disclosed in Patent Document 1, foamed particles are obtained by the so-called "impregnation method" that is impregnating step of resin particles with carbon dioxide gas as the foaming agent to produce foaming particles in impregnation, and foaming the foaming particles in subsequent foaming step.

Patent Document 2 discloses a method for producing polycarbonate resin foamed particles. This method is a so-called "extrusion foaming method" in which a polycarbonate resin having a branched structure and exhibiting specific viscoelasticity is used, and the polycarbonate resin together with a foaming agent are melt-kneaded and extruded and foamed by an extruder. In the method of Patent Document 2, foamed particles having an average cell diameter of 300 um or less and a bulk factor of about 3 to 4 times are exclusively produced.

Patent Document 3 discloses a resin composition mainly including a branched polycarbonate resin and optionally containing a linear polycarbonate resin and exhibiting a specific melt tension and melt viscosity. By specifying the melt tension of the resin composition within a specific range, a high foaming ratio can be obtained without destroying foam cells during extrusion foam molding. Moreover, by specifying the melt viscosity within a specific range, a resin composition that is easy to be shaped and extruded can be obtained.

Note here that conventionally, various hydrocarbons such as propane, butane, hexane, and heptane have been widely used as a foaming agent to be used during production of foamed particles. Because these are excellent in compatibility with the base resin of the foamed particles, when these are used as a foaming material, foamed particles with a high foaming ratio can be obtained relatively easily. For example, Patent Document 3 also describes foamed particles with a foaming ratio of about 10 to 15 times using a polycarbonate resin and heptane or butane as a foaming agent.

Citation List

Patent Document

Patent Document 1: Japanese Unexamined Patent Application, Publication No. 2016-188321
Patent Document 2: Japanese Unexamined Patent Application, Publication No. 2021-54959
Patent Document 3: Japanese Unexamined Patent Application, Publication No. H10-237292

DISCLOSURE OF THE INVENTION

Problems to be Solved by the Invention

Polycarbonate resin has excellent physical properties such as heat resistance, but has a problem that it is difficult to foam at a high ratio. In particular, in the "extrusion foaming method" in which foaming occurs in a molten state, the resin cannot withstand the expansion of a cell and easily breaks, and foamed particles are likely to have a low foaming ratio and a high open cell ratio. In order to prevent the above, studies have been made to prevent membrane rupture by increasing the elasticity of the base material in a molten state. An example of an index of this "elastic property in a molten state" includes melt tension.

In foamed resins including linear polycarbonate as a main component, the foam cells tend to break during molding due to insufficient melt tension, making it difficult to obtain a high foaming ratio. Furthermore, when high molecular weight polycarbonate is used as a raw material resin to increase melt tension, the melt viscosity increases, so that moldability may be reduced and foams having small foam cell diameters and being unsuitable for insulation materials may be generated. Furthermore, use of a high molecular weight linear polycarbonate may lead to high open cell of foam cells and may cause a decrease in heat insulation properties, mechanical strength, and the like. Even if high foaming is achieved by changing the type of foaming agent, resin, foaming conditions, and the like, the resulting polycarbonate foam particles often tend to have insufficient physical properties such as moldability, appearance, and mechanical strength.

In the polycarbonate-based foamed particles described in Patent Document 1, deterioration of an appearance is prevented by specifying the average cell diameter in addition to the cell density. However, foamed particles having such fine cells generally tend to have a high open cell ratio and tend to have poor in-mold moldability. Furthermore, these foamed particles are produced by the impregnation method as described above, and there is a problem that productivity is very poor due to batch processing.

The foamed particles disclosed in Patent Document 2 also have relatively fine cells with an average cell diameter of 300 um or less, and similarly tend to have a high open cell ratio and have poor in-mold formability. A method described in Patent Document 2 is an extrusion foaming method as mentioned above and continuous production is possible.

Note here that in Patent Documents 1 and 2, inorganic foaming agent is preferable for the foaming agent, and carbon dioxide gas is used. Conventionally used hydrocarbon foaming agents described above are flammable, and there is a risk of fire, so that special production equipment is needed. Therefore, in recent years, efforts have been made to use nonflammable foaming agents such as inorganic gases, particularly, carbon dioxide gas and nitrogen, as a foaming agent.

However, carbon dioxide gas has a problem of poor compatibility with polycarbonate. In the technology of Patent Document 2, carbon dioxide gas is used as a foaming agent, while a brand having relatively high viscosity is used as a base resin, so that cooling of the resin is insufficient, carbon dioxide gas cannot be satisfactorily dissolved in the resin, and the foaming ratio is difficult to be increased. Furthermore, the foamed particles obtained have a low foaming ratio, and an additional secondary foaming step may be required to achieve a desired foaming ratio. Consequently, the productivity is not satisfactory.

The resin composition described in Patent Document 3 uses branched polycarbonate as the main resin component to increase the melt tension and achieve a high foaming ratio. However, branched polycarbonate as the main component tends to have highly open cell ratio. Moreover, when extruding the "branched resin," the pressure at the die part is higher than a case where a resin with a linear structure is used, and the composition described in Patent Document 3 also has a high viscosity, thus making it difficult to sufficient cooling. Even if such a resin composition is allowed to foam with carbon dioxide gas, it is difficult to obtain foamed particles with a low open cell ratio at a high foaming ratio. Therefore, in the technology described in Patent Document 3, in order to obtain a satisfactory foaming ratio, a hydrocarbon-based foaming agent that has high compatibility with the resin and dissolves in a sufficient amount even if the degree of cooling is low, hereby posing problems in terms of safety and cost.

The present invention was made in view of the above problems, and has an object to provide polycarbonate-based foamed particles having relatively large cell diameter and high foaming ratio, but having a low open cell ratio, exhibiting excellent heat insulation, heat resistance, and mechanical strength, and giving a molded product easily molded and having a good appearance, and to provide a method for producing the polycarbonate-based foamed particles.

Means for Solving the Problems

The inventors of the present invention have carried out intensive studies on the problems of the conventional technologies as described above, and have found that by using polycarbonate having a linear structure and polycarbonate having a branched structure as components of the polycarbonate-based foamed particles at a specific ratio, and by specifying an average cell diameter and an open cell ratio, foamed particles that can give a molded product exhibiting excellent insulating property and mechanical strength, being molded easily, and having a good appearance, can be obtained. The foaming particles of the present invention have a feature that forming of open cell is sufficiently suppressed by making the cell diameter be a relatively large specific range.

The present inventors also found that polycarbonate-based foamed particles can be obtained by an extrusion foaming method in which the polycarbonate component as described above is kneaded with a foaming agent in an extruder, and that the formed particles having a relatively high foaming ratio can be obtained even when a carbon dioxide gas is used as the foaming agent.

Although the present invention is not limited by any particular theory, in the present invention, a component having a linear structure, more preferably a component having a relatively low viscosity, is used as the main component of the polycarbonate-based resin as the base material, and a small amount of a component having a branched structure is contained, sufficient cooling of the resin in extrusion foaming can be made extremely easy, and an increase in the open cell ratio due to cell wall rupture can be suppressed. As a result, even when a foaming agent with poor compatibility with respect to resin, such as carbon dioxide gas, is used, foamed particles having high foaming ratio and low open cell ratio and being excellent in heat insulation, mechanical strength, in-mold moldability, and the like, can be obtained relatively easily. The present invention has been completed based on these findings.

In other words, the present invention provides follows.

(1) Polycarbonate-based foamed particles including at least a polycarbonate resin composition, in which

an average cell diameter is more than 300 um and 1000 um or less,
an open cell ratio is 0.1% or more and 30% or less,
the polycarbonate resin composition includes a linear polycarbonate and a branched polycarbonate, and
a content of the linear polycarbonate in the polycarbonate resin composition is 60 parts by mass or more and 95 parts by mass or less with respect to a total of 100 parts by mass of the linear polycarbonate and the branched polycarbonate.

(2) The polycarbonate-based foamed particles according to the above (1), in which the polycarbonate resin composition further including one or more cell nucleating agents selected from talc, clay, or silica, or not including a cell nucleating agent,
in which a content of the cell nucleating agent is less than 0.1 parts by mass with respect to a total of 100 parts by mass of the linear polycarbonate and the branched polycarbonate.
(3) The polycarbonate-based foamed particles according to the above (1) or (2), in which a foaming ratio is 4 times or more and 10 times or less.
(4) The polycarbonate-based foamed particles according to any one of the above (1) to (3), in which the average cell diameter is 700 to 900 $\mu$m.
(5) The polycarbonate-based foamed particles according to any one of the above (1) to (4), in which the open cell ratio is 0.1% or more and 10% or less.
(6) The polycarbonate-based foamed particles according to any one of the above (1) to (5), in which a content of the linear polycarbonate in the polycarbonate resin composition is 65 to 92 parts by mass with respect to a total of 100 parts by mass of the linear polycarbonate and the branched polycarbonate.
(7) The polycarbonate-based foamed particles according to any one of the above (1) to (6), in which a viscosity-average molecular weight of the linear polycarbonate is 5000 to 30000, and a viscosity-average molecular weight of the branched polycarbonate is 10000 to 50000.
(8) The polycarbonate-based foamed particles according to any one of the above (1) to (7), in which a melt flow rate (MFR) (300°C, 1.2 kgf) of the linear polycarbonate is 40 g/10 min or more and 70 g/10 min or less.
(9) The polycarbonate-based foamed particles according to any one of the above (1) to (8), in which a melt flow rate (MFR) (300°C, 1.2 kgf) of the branched polycarbonate is 10 g/10 min or less.
(10) The polycarbonate-based foamed particles according to any one of the above (1) to (9), in which a melt flow rate (MFR) (300°C, 1.2 kgf) of the linear polycarbonate is 52 to 70 g/10 min, and the melt flow rate (MFR) (300°C, 1.2 kgf) of the branched polycarbonate is 1 to 10 g/10 min.
(11) The polycarbonate-based foamed particles according to any one of the above (1) to (10), in which the linear polycarbonate is a linear aromatic polycarbonate, and the branched polycarbonate is a branched aromatic polycarbonate.
(12) The polycarbonate-based foamed particles according to any one of the above (1) to (11), in which a bulk density is 80 to 300 g/L.
(13) A method for producing the polycarbonate-based foamed particles according to any one of the above (1) to (12), the method including at least:

a foaming agent-kneading step including kneading a foaming agent into the polycarbonate resin composition in an extruder;
an extrusion foaming step including extruding and foaming the polycarbonate resin composition kneaded with the foaming agent in an atmosphere at a lower pressure than in the extruder; and
a granulating step including cutting the extruded polycarbonate resin composition to granulate the polycarbonate-based foamed particles.

(14) The method according to the above (13), in which the foaming agent is carbon dioxide, an amount of the foaming agent is 1.8 parts by mass or less with respect to a total of 100 parts by mass of the linear polycarbonate and the branched polycarbonate, and a temperature of the polycarbonate resin composition in the extrusion foaming step is 200°C or less.

(15) A molded product of polycarbonate-based foam, formed by molding the polycarbonate-based foamed particles according to any one of the above (1) to (12).

The present invention also provides the followings.

(16) The polycarbonate-based foamed particles according to any one of the above (1) to (10) and (12), in which the linear polycarbonate is a linear aromatic polycarbonate.

(17) The polycarbonate-based foamed particles according to any one of the above (1) to (12) and (16), in which the linear polycarbonate is a linear polycarbonate based on bisphenol A.

(18) The polycarbonate-based foamed particles according to any one of the above (1) to (10), (12), (16), and (17), in which the branched polycarbonate is a branched aromatic polycarbonate.

(19) The polycarbonate-based foamed particles according to any one of the above (1) to (12) and (16) to (18), in which the branched polycarbonate is a branched polycarbonate based on bisphenol A.

(20) The polycarbonate-based foamed particles according to any one of the above (1) to (12) and (16) to (19), in which an amount of the linear polycarbonate in the polycarbonate resin composition is 70 to 90 parts by mass with respect to a total of 100 parts by mass of the linear polycarbonate and the branched polycarbonate.

(21) The polycarbonate-based foamed particles according to any one of the above (1) to (12) and (16) to (20), in which a melt tension of the branched polycarbonate is 2.0 cN or more and 15 cN or less.

(22) The polycarbonate-based foamed particles according to any one of the above (1) to (12) and (16) to (21), in which the open cell ratio is 0.1% or more and 2% or less.

(23) The polycarbonate-based foamed particles according to any one of the above (1) to (12) and (16) to (22), in which a thickness of cell wall is 5 to 100 $\mu$m.

(24) The method according to any one of the above (13) or (14), in which the foaming agent is one or more agents selected from the group consisting of propane, n-butane, i-butane, n-pentane, i-pentane, neopentane, cyclopentane, carbon dioxide, nitrogen, water, dimethyl ether, and diethyl ether.

(25) The method according to any one of the above (13), (14), or (24), in which the cell nucleating agent is not used.

The present invention further provides a method for producing the polycarbonate-based foamed particles as described in any one of the above (16) to (23), the method being in accordance with the method described in the above (13), (14), (24), or (25). Additionally, the present invention provides a molded body of polycarbonate-based foam, formed by molding the polycarbonate-based foam particles described in any one of the above (16) to (23).

Effects of the Invention

The present invention can provide polycarbonate-based foamed particles having a relatively large cell diameter, having a low open cell ratio, and therefore exhibiting excellent heat insulation properties, heat resistance, and mechanical strength, and giving a molded product to be easily molded and having good appearance, and a method for producing the polycarbonate-based foamed particles, and, in particular, a production method with excellent safety and productivity.

PREFERRED MODE FOR CARRYING OUT THE INVENTION

Hereinafter, specific embodiments of the present invention will be described in detail. Note here that the present invention is not limited to the following embodiments, and various changes can be made without changing the gist of the present invention.

<Polycarbonate-based foamed particle>

In the polycarbonate-based foamed particle of this embodiment, an average cell diameter is more than 300 um and 1000 um or less, and an open cell ratio is 0.1% or more and 30% or less. Furthermore, the polycarbonate-based foamed particles contain linear polycarbonate and branched polycarbonate at a specific ratio. Since the average cell diameter is more than 300 $\mu$m, the polycarbonate-based foamed particle of this embodiment is excellent in physical properties such as heat insulation property. Furthermore, since the average cell diameter is 1000 um or less, the foamed particles have good physical properties such as mechanical strength, and exhibit a good appearance when molded into various foamed resin molded bodies. Furthermore, since the open cell ratio is 30% or less, excellent physical properties such as heat insulation property and mechanical property are achieved.

[Average cell diameter]

An average cell diameter of polycarbonate-based foamed particles can be measured by a method such as cross-sectional observation. For example, polycarbonate-based foamed particles are cut using a razor at a perpendicular bisector to the long axis diameter, and an enlarged photograph of the cross section is taken. Next, the number C of cells existing within a radius of 1000 um from the center point of the cross section, for example, within a square area of 1000 $\mu$m $\times$ 1000 $\mu$m, is counted. From the number of cells, the average cell diameter can be calculated based on the following formula (1).

Average cell diameter ($\mu$m) = 2 $\times$ [1000 ($\mu$m) $\times$ 1000 ($\mu$m) /(C $\times$ pi)]$^{0.5}$ Formula (1)

The average cell diameter of the polycarbonate-based foamed particle according to this embodiment is preferably 400 to 1000 $\mu$m, more preferably 500 to 950 $\mu$m, and further more preferably 700 to 900 um. By setting the average cell diameter within the above numerical range, the heat insulation property and mechanical property of the polycarbonate-based foamed particles can be further improved.

[Open cell ratio]

The open cell ratio of polycarbonate-based foamed particles can be measured according to a method defined in PROSEDURE C of ASTM D2856-87. A volume Vc (cm$^3$) of polycarbonate-based foamed particle was measured with use of, for example, an air comparison pycnometer, then polycarbonate-based foamed particles were entirely submerged in ethanol in a graduated cylinder, and an apparent volume Va (cm$^3$) of the polycarbonate-based foamed particles was determined from a difference in liquid level in the graduated cylinder (submersion method), followed by calculation from the following Formula (2).

$$\text{Open cell ratio (\%) = (Va-Vc)} \times \text{100/Va} \quad \text{...Formula (2)}$$

The open cell ratio of the polycarbonate-based foamed particles according to this embodiment is preferably as low as possible, and ideally 0%. However, since it is practically almost impossible to set the open cell ratio to 0, that is, to make all the cells closed cells, in this embodiment, the lower limit value of the open cell ratio is set to, for example, 0.1%. The upper limit of the open cell ratio is preferably 20% or less, more preferably 10% or less, especially 5% or less, and particularly preferably 2% or less.

[Polycarbonate]

The foamed particles according to this embodiment include polycarbonate as a main component. Polycarbonate is a polymer with a basic structure having carbonic acid bonds represented by -[-O-X-O-C(=O)-]-. In the above Formula, X represents a linking group, and is generally a hydrocarbon group, but X having a hetero atom or a hetero bond may be used to impart various characteristics. In this embodiment, as described later, there is no particular restriction other than using two types of polycarbonates, linear and branched, in a specific ratio, and any type of polycarbonate can be used. The polycarbonate of the present embodiment preferably contains repeating units of polycarbonate in an amount of 80% by mass or more, more preferably 90% by mass or more, when the repeating units of the entire polycarbonate is 100% by mass. The polycarbonate of this embodiment may contain repeating units other than polycarbonate within the above range.

Aliphatic polycarbonate and aromatic polycarbonates are generally known as polycarbonates. Although aliphatic polycarbonates have a low thermal decomposition temperature, it has good physical properties such as impact resistance, lightness, transparency, and heat resistance. Some aliphatic polycarbonates have advantages of being biodegradable and of having a low environmental impact. Aromatic polycarbonate resins have excellent physical properties such as heat resistance, transparency, hygiene, electrical properties, and mechanical properties, and are widely used for various purposes. Also in this embodiment, it is preferable to use aromatic polycarbonate.

Aromatic polycarbonates can be obtained, for example, by reacting dihydric phenol with a carbonate precursor such as phosgene or diester carbonate. Examples of the reaction method include an interfacial polymerization method, a melt transesterification method, a solid phase transesterification method of carbonate prepolymers, and a ring-opening polymerization method of cyclic carbonate compounds.

Typical examples of dihydric phenols used in the production of polycarbonate include hydroquinone, resorcinol; bisphenols such as 4,4'-biphenol, bis(4-hydroxyphenyl)methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxyphenyl)butane, bis(4-hydroxyphenyl)diphenylmethane, 2,2-bis(4-hydroxy-3-methylphenyl)propane, 2,2-bis(3-methyl-4-hydroxyphenyl)propane, 2,2-bis(4-hydroxy-3-isopropyl)phenyl)propane, 2,2-bis(4-hydroxy-3-t-butylphenyl)propane, 2,2-bis(4-hydroxy-3,5-dimethylphenyl)propane, 1,1-bis(3-t-butyl-4-hydroxyphenyl)propane, 2,2-bis(4-hydroxy-3,5-dibromophenyl)propane, 2,2-bis(3-bromo-4-hydroxyphenyl)propane, 2,2-bis(3,5-dichloro-4-hydroxyphenyl)propane, 2,2-bis(4-hydroxyphenyl)heptane, 1,1-bis(4-hydroxyphenyl)cyclopentane, 1,1-bis(4-hydroxyphenyl)cyclohexane, 1,1-bis(3,5-dichloro-4-hydroxyphenyl)cyclohexane, 1,1-bis(3,5-dibromo-4-hydroxyphenyl)cyclohexane, bis(4-hydroxyphenyl)sulfone, bis(4-hydroxyphenyl)sulfide, but are not limited thereto. These may be used alone or in combination of two or more. Among these, 2,2-bis(4-hydroxyphenyl)propane, that is, polycarbonate based on bisphenol A, is excellent in mechanical strength, heat insulation, flame retardance, buffering properties, and the like, in a well-balanced manner, and is particularly preferably used in this embodiment.

Examples of diester carbonates used in the production of polycarbonate include diphenyl carbonate, dinaphthyl carbonate, bis(diphenyl) carbonate, dimethyl carbonate, diethyl carbonate, dibutyl carbonate, and the like. Among them, diphenyl carbonate is preferable.

The viscosity-average molecular weight of polycarbonate is not particularly limited, but is preferably in a range from 5000 to 50000, more preferably in a range from 7000 to 45000, and particularly preferably in a range from 10000 to 40000. When the viscosity-average molecular weight is in a range from 5000 to 50000, a foam having an excellent balance between properties such as heat resistance and mechanical properties and moldability and having a good surface appearance can be obtained particularly easily.

In this embodiment, the viscosity average molecular weight (Mv) of the polycarbonate is determined by measuring the viscosity of a methylene chloride solution of the polycarbonate resin at a temperature of 20°C using an Ubbelohde viscometer, and calculating the intrinsic viscosity ($[\eta]$). The value calculated from the viscosity formula below is shown.

$$[\eta] = 1.23 \times 10^{-4} \, Mv^{0.83}$$

The polycarbonate-based foamed particles of this embodiment include at least a polycarbonate resin composition containing the polycarbonate described above. Furthermore, the polycarbonate resin composition contains at least two types of polycarbonates, that is, linear polycarbonate and branched polycarbonate. These polycarbonates will be described below.

(Linear polycarbonate)

The linear polycarbonate in this embodiment is exclusively a polycarbonate having a linear structure. Among them, linear aromatic polycarbonates, particularly linear polycarbonates based on bisphenol A, are preferable. Note here that in the process of producing linear polycarbonate, a branched structure may be mixed, but in this embodiment, polycarbonate having such a small amount, for example, 0.1% or less, desirably 0.05% or less of branched structure is also handled as linear polycarbonate.

As mentioned above, linear polycarbonate can be produced from, for example, dihydric phenol and phosgene or a carbonate precursor, and various product classes are commercially available. In this embodiment, any linear polycarbonate can be used in this embodiment. Examples include, but are not limited to, SD POLYCA® manufactured by Sumika Polycarbonate Co., Ltd., Iupilon®, Novarex®, Xanter®, manufactured by Mitsubishi Engineering Plastics Co., Ltd., and the like. A plurality of linear polycarbonates can also be used together.

There are a wide variety of product classes of linear polycarbonate, and, for example, even focusing on the melt flow rate (MFR) at 300°C and 1.2 kgf, various resins ranging from about 1 to 65 g/10 min are commercially available. In the present embodiment, it is preferable to use a resin having an MFR (300°C, 1.2 kgf) of 40 g/10 min or more, and 52 to 70 g/10 min, particularly about 55 to 65 g/10 min, as the linear polycarbonate. In the case of the resin having a relatively high melt flow rate among polycarbonates, when the resin is combined with the branched polycarbonate described later and foamed, it is easier to form foamed particles having an average cell diameter of more than 300 um and 1000 um or less and an open cell ratio of 0.1% to 30%.

The viscosity average molecular weight of the linear polycarbonate is not particularly limited, but is preferably in the range of 5000 to 30000, more preferably 7000 to 25000, particularly preferably 10000 to 20000. When the average molecular weight is in the range of 5000 to 30000, a foam having an excellent balance between physical properties such as heat resistance and mechanical properties and moldability and having a good surface appearance can be obtained particularly easily.

(Branched polycarbonate)

The branched polycarbonate in this embodiment is a polycarbonate having a branched structure. Among these, branched aromatic polycarbonates, particularly branched polycarbonates based on bisphenol A, are preferable. The branched structure can be produced by copolymerizing the above-mentioned polycarbonate raw material and a trifunctional or higher functional compound, for example, polyfunctional aromatic compound. The branched structure can also be produced by using side reactions during melt transesterification.

Examples of polyfunctional compounds that can be used as raw materials for branched polycarbonate include trisphenol such as 4,6-dimethyl-2,4,6-tris(4-hydroxydiphenyl)heptene-2,2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol, 4-{4-[1,1-bis(4-hydroxyphenyl)ethyl]-$\alpha,\alpha$-dimethylbenzyl}phenol, phloroglucin, phloroglucide, tetra(4-hydroxyphenyl)methane, bis(2,4-dihydroxyphenyl)ketone, 1,4-bis(4,4-dihydroxytriphenylmethyl)benzene, trimellitic acid, pyromellitic acid, benzophenonetetracarboxylic acid, and acid chlorides thereof. Among these, 1,1,1-tris(4-hydroxyphenyl)ethane and 1,1,1-tris(3,5-dimethyl-4-hydroxyphenyl)ethane are preferable, and 1,1,1-tris(4-hydroxyphenyl)ethane is particularly preferable.

The branched structure in the branched polycarbonate, that is, the structural unit derived from the polyfunctional compound, is preferably, for example, about 0.03 to 1% by mol, more preferably 0.07 to 0.7% by mol, and particularly 0.1 to 0.4% by mol in 100% by mol of the total structural units in the polycarbonate molecule. When the ratio of the branched structure is about 0.03 to 1% by mol, the branched polycarbonate will have a good balance of high melt tension and fluidity, and the branched polycarbonate can be combined with the above-mentioned linear polycarbonate so as to easily form polycarbonate-based foamed particles with an appropriate foamed form. Note that the proportion of branched structures can be measured, for example, by $^1$H-NMR.

Various types of branched polycarbonates are known, for example, branched polycarbonates with MFR (300°C, 1.2 kgf) ranging from 0.1 to 20 g/10 min. In this embodiment, any of these branched polycarbonates may be used, or a plurality of types may be used in combination. Preferably, branched polycarbonate with MFR (300°C, 1.2 kgf) of 10 g/10 min or less, particularly 1 to 10 g/10 min is used. When branched polycarbonate with such MFR is combined with the linear polycarbonate and foamed, foamed particles having an average cell diameter of more than 300 um and 1000 um or less, and an open cell ratio of 0.1% or more and 30% or less can be formed more easily. Among them, when combined with a linear polycarbonate having an MFR (300°C, 1.2kgf) of 40 g/10 min or more, particularly combined with a linear polycarbonate having an MFR (300°C, 1.2 kgf) of 52 to 70 g/10 min and branched polycarbonate having an MFR (300°C, 1.2 kgf) of 1 to 10 g/10 min, foamed particles with an appropriate foamed form can be produced more easily.

The viscosity average molecular weight of the branched polycarbonate is not particularly limited, but is preferably in the range of 10000 to 50000, more preferably 20000 to 40000, and further more preferably 25000 to 35000. When the average molecular weight is in the range of 10000 to 50000, a foam having an excellent balance between physical properties such as heat resistance and mechanical properties and moldability and having a good surface appearance can be obtained particularly easily.

Although the melt tension of branched polycarbonate is not particularly limited, it can usually be higher than the melt tension of linear polycarbonate. The melt tension of the branched polycarbonate at, for example, 280°C is preferably 2.0 cN or more, and more preferably 3.0 cN or more. When the melt tension of the branched polycarbonate is, for example, 2.0 cN or more at 280°C, the polycarbonate resin composition maintains higher strength even in the molten state, and the foam cells will be less likely to break. As a result, the foaming ratio of the obtained polycarbonate-based foamed particle can further be enhanced. In particular, when combined with a linear polycarbonate with an MFR (300°C, 1.2 kgf) of 40 g/10 min or more, the melt tension of branched polycarbonate is preferably, for example, 4.0 cN or more, and further 5.0 or more. The upper limit of the melt tension preferably is 15 cN or less, and particularly 10 cN or less. When the upper limit of the melt tension is 15 cN or less makes it easy to suppress becoming finer and highly open cell of foam cells.

The method for measuring melt tension in this specification will be described below. In this specification, melt tension can be measured using, for example, Capillograph® 1D (manufactured by Toyo Seiki Seisakusho Co., Ltd., Japan). Specifically, the measurement is carried out as follows (1) to (4): (1) a sample resin for measurement (branched polycarbonate) is placed in a barrel with a diameter of 9.55 mm heated to the test temperature (for example, 280°C); (2) then, the sample resin is heated for 10 minutes in a barrel heated to the test temperature (for example, 280°C); (3) then, while the sample resin is extruded from the capillary die (diameter 1.0 mm, length 10 mm) into a string shape at a constant piston drop speed (10 mm/min), the strand is allowed to pass through a tension detecting pulley located at 350 mm below the capillary die, and then the strand is winded at a winding speed of 10 m/min using a winding roll; (4) after winding of the strand is stabilized, the load applied to the pulley is measured with the load cell as the melt tension.

[Polycarbonate resin composition]

In the polycarbonate-based foamed particle of this embodiment, the polycarbonate resin composition as the base material contains linear polycarbonate and branched polycarbonate as mentioned above. Herein, an amount of the content of the linear polycarbonate in the polycarbonate resin composition is 60 parts by mass or more and 95 parts by mass or less with respect to a total of 100 parts by mass of the linear polycarbonate and the branched polycarbonate (hereinafter, which may be abbreviated as "both polycarbonate resins").

As mentioned above, foamed resins containing linear polycarbonate as a main component tend to have low melt elasticity (melt tension), so that the foam cells tend to break during molding, resulting in insufficient foaming ratio. On the other hand, in foamed resin including branched polycarbonate as a main component, the foaming ratio can be increased, but the melt viscosity of the resin is generally high, which tends to make it difficult to cool the resin composition containing a base resin and a foaming agent. As a result, this tends to cause finer foam cells and higher open cells. Herein, when an amount of the content of linear polycarbonate is set to 60 parts by mass or more and 95 parts by mass or less with respect to a total of 100 parts by mass of both polycarbonate resins, it is possible to bring out the advantages of the both polycarbonate resins and, at the same time, to eliminate their disadvantages. When an average cell diameter is more than 300 um and 1000 um or less, polycarbonate-based foamed particles with an open cell ratio of 0.1% or more and 30% or less can be achieved. An amount of the content of the linear polycarbonate is preferably 65 to 92 parts by mass, particularly 70 to 90 parts by mass, respect to a total of 100 parts by mass of both polycarbonate resins.

(Cell nucleating agent)

The polycarbonate resin composition may also contain a cell nucleating agent (nucleating agent) such as talc, clay, and silica. Due to the presence of the cell nucleating agent, the foaming ratio of polycarbonate-based foamed particles can be further increased. However, since the open cell ratio may increase due to the use of a cell nucleating agent, it is preferable that a cell nucleating agent such as talc is not included in the polycarbonate resin composition, and when it is included, it is preferably less than 0.1 parts by mass, for example, 0.01 parts by mass or less, or about 0.01 to 0.09 parts by mass with respect to a total of 100 parts by mass of both polycarbonate resins.

(Other components)

In addition to the above-mentioned components, the polycarbonate resin composition may include additives such as polymers other than polycarbonate, stabilizers, lubricants, flame retardants, antistatic agents, plasticizers, water absorbers, antioxidants, deterioration inhibitors, colorants, and/or radiation suppressants to the extent that the effects of the present invention are not impaired. The types and amounts of these components can be appropriately set depending on the desired effect, and for example, 0.01 to 5 parts by mass, particularly 0.1 to 1 parts by mass with respect to 100 parts by mass of both polycarbonate resins.

Polymers other than polycarbonate include polyolefin resins, polystyrene resins such as AS resins and ABS resins, polyamide resins, polyester resins, polyvinyl chloride resins, polyether resins, and further includes elastomers such as SBR, NBR, SBS, SIS, SEBS, EPDM, fluororubber, and the like, but are not limited thereto. By adding, for example, 1 to 5 parts by mass of such a polymer with respect to a total of 100 parts by mass of both polycarbonate resins, the mechanical properties, moldability, and the like, of the polycarbonate-based foamed particles can be improved. However, from the viewpoint of easily achieving the effects of the present invention, it is preferable that the polycarbonate resin composition does not contain such other polymers and consists only of polycarbonate.

As described above, the polycarbonate resin composition in this embodiment combines the advantages of linear polycarbonate and branched polycarbonate, and therefore polycarbonate-based foamed particles having an average cell diameter of more than 300 um and 1000 um or less, and an open cell ratio of 0.1% or more and 30% or less can be formed, and high foaming ratio can be achieved.

[Foaming ratio]

In the polycarbonate-based foamed particle of this embodiment, the foaming ratio is preferably 4 times or more and 10 times or less, and particularly 5 times or more and 8 times or less. By setting the foaming ratio within the above numerical range, it is possible to provide a lightweight and high-strength foamed molded product when a foamed molded product is produced using polycarbonate-based foamed particles.

Herein, the foaming ratio can be determined from the density $d_1$ (g/L) of a polycarbonate resin composition and the apparent density $d_2$ (g/L) of the polycarbonate-based foamed particles. Note here that the apparent density $d_2$ can be determined from the apparent volume Va determined by the above-mentioned submersion method and the weight of the polycarbonate-based foamed particles used therein. More specifically, the foaming ratio can be calculated using the following Formula (3).

$$\text{Foaming ratio} = d_1/d_2 \quad \text{...Formula (3)}$$

[Bulk density]

The bulk density $d_2$ can be calculated by, for example, the following formula (4), from the volume V (L) of polycarbonate-based foamed particles and the weight W (g) thereof measured by the following procedures: put the extruded foamed resin particles into a container such as a graduated cylinder, beaker, bucket, and the like, the volume V (L) of which is known, until the extruded foamed resin particles overflow from the container; the powder surface (upper end) of the container is scraped, and the weight W (g) of the extruded foamed resin particles in the container is measured.

$$\text{Bulk density } d_3 \text{ (g/L)} = W/V \quad \text{...Formula (4)}$$

Note here that the bulk density of the polycarbonate-based foamed particles according to this embodiment is preferably 80 to 300 g/L, and particularly preferably 110 to 270 g/L. By setting the bulk density within the above numerical range, the particle diameter of the polycarbonate-based foamed particles can be made smaller, and the gaps between the polycarbonate-based foamed particles can be reduced on the surface of the foam molded product produced using the polycarbonate-based foamed particles. As a result, the fusion properties and appearance of the entire foam molded product can be further improved.

The thicknesses of the cell wall of the polycarbonate-based foamed particles of this embodiment are preferably 5 to 100 $\mu$m, and more preferably 10 to 80 um. Within the above range, the cell wall is sufficiently thick, so that the foamed particles can be expanded without bursting cells during foaming, for example, during two-stage foaming. Furthermore, since the cell wall is sufficiently thick, a molded product can be obtained without bursting cells during heat molding.

[Foaming agent (foaming gas)]

The polycarbonate-based foamed particle of this embodiment includes at least the above-mentioned polycarbonate resin composition. The polycarbonate-based foamed particles of this embodiment also have an open cell ratio of 0.1% or more and 30% or less, so that polycarbonate-based foamed particles include a large number of closed cells and usually include foaming gas derived from a foaming agent. Herein, as the foaming agent, one or more foaming agents selected from the group consisting of physical foaming agents and chemical foaming agents can be used.

Specific examples of physical foaming agents include hydrocarbons such as propane, n-butane, i-butane, n-pentane, i-pentane, neopentane, and cyclopentane; fluorinated hydrocarbon such as 1,1-difluoroethane, 1,2-difluoroethane, 1,1,1-trifluoroethane, 1,1,2-trifluoroethane, 1,1,1,2-tetrafluoroethane, 1,1,2,2-tetrafluoroethane, 1,1,1,2,2-pentafluoroethane, difluoromethane, trifluoromethane; inorganic gases such as carbon dioxide, nitrogen, water, argon, and helium; ethers such as dimethyl ether, diethyl ether, methyl ethyl ether, isopropyl ether, n-butyl ether and diisoamyl ether. From them, one type or a mixture of two or more types can be used.

Specific examples of chemical foaming agents include N,N'-dinitrosopentamethylenetetramine, p,p'-oxybis-benzenesulfonylhydrazide, hydrazodicarbonamide, sodium carbonate, calcium carbonate, potassium carbonate, sodium bicarbonate, potassium bicarbonate, azodicarbonamide, terephthalazide, 5-phenyltetrazole, p-toluenesulfonylsemicarbazide, and the like. From them, one type or a mixture of two or more types can be used.

Among the above-mentioned physical foaming agent and chemical foaming agents, it is preferable that carbon dioxide is used as the foaming agent. Carbon dioxide is a substance that is nonflammable and harmless to living things, including humans. Therefore, using carbon dioxide as a foaming agent can improve safety and environmental compatibility. Note here that carbon dioxide to be used for the foaming agent may be in either a gas state or a liquid state.

<Method for producing polycarbonate-based foamed particles>

Polycarbonate-based foamed particles according to this embodiment can be produced by the following method including at least:

foaming agent kneading step including kneading a foaming agent into a polycarbonate resin composition in an extruder;
extrusion foaming step including extruding and foaming the polycarbonate resin composition kneaded with the foaming agent in an atmosphere at a lower pressure than in the extruder; and
granulating step including cutting the extruded polycarbonate resin composition to granulate polycarbonate-based foamed particles.

It is preferable that the method for producing polycarbonate-based foamed particles according to one embodiment of the present invention includes at least, for example, foaming agent kneading step [step 1], extrusion foaming step [step 2], and granulating step [step 3]. Furthermore, as a step prior to foaming agent kneading step, the method preferably includes resin kneading step [step 0] by the same extruder or a different kneader. Each step is described in detail in the following.

(i) Resin kneading step [step 0]

In the resin kneading step [step 0], linear polycarbonate and branched polycarbonate are mixed, preferably melt-kneaded to obtain a polycarbonate resin composition. In this step, additives such as nucleating agents, stabilizers, lubricants, flame retardants, antistatic agents, plasticizers, water absorbing agents, antioxidants, deterioration inhibitors, colorants, and/or radiation suppressants may be added as necessary.

Herein, the mass ratio of linear polycarbonate : branched polycarbonate is 60 : 40 to 95 : 5, preferably 65 : 35 to 92 : 8, more preferably 70 : 30 to 90 : 10. The linear polycarbonate preferably is a resin having a melt flow rate (MFR) (300°C, 1.2kgf) of 40 g/10 min or more, particularly 52 to 70 g/10 min, and the branched polycarbonate preferably is a resin having a melt flow rate (MFR) (300°C, 1.2kgf) of 10 g/10 min or less, particularly 1 to 10 g/10 min. Furthermore, it is preferable that the linear polycarbonate is linear aromatic polycarbonate, and the branched polycarbonate is branched aromatic polycarbonate. Furthermore, it is preferable that the viscosity-average molecular weight of the linear polycarbonate is 5000 to 30000, and the viscosity-average molecular weight of the branched polycarbonate is 10000 to 50000.

Note that it is preferable that a cell nucleating agent such as talc is not used, and even if used, cell nucleating agent is preferably less than 0.1 parts by mass, for example, 0.01 parts by mass or less, or 0.01 to 0.09 parts by mass with respect to 100 parts by mass of the total of the linear polycarbonate and the branched polycarbonate.

The resin kneading step [step 0] is preferably carried out in the same device as the extruder used in [step 1] and later steps in terms of work efficiency, but a separate extruder for kneading, a batch-type closed mixer, for example, a Banbury mixer or a pressure kneader may be used. Furthermore, the kneading of resin can be carried out simultaneously with the kneading of the foaming agent in the foaming agent kneading step [step 1], which will be described next, and [step 0] can be virtually omitted.

(ii) Foaming agent kneading step [step 1]

In the foaming agent kneading step [step 1], a foaming agent is kneaded into the polycarbonate resin composition in an extruder. The foaming agent can be dissolved and dispersed in the melt-kneaded product of the polycarbonate resin composition using mixing equipment installed in the extruder.

In this [step 1], the above-mentioned physical foaming agent and chemical foaming agent can be used as the foaming agent. In particular, it is preferable to use carbon dioxide as the foaming agent. Carbon dioxide is a substance that is nonflammable and harmless to living things including humans. Therefore, using carbon dioxide as a foaming agent can improve safety and environmental compatibility.

In this [step 1], carbon dioxide or other foaming agents are used preferably in an amount of 0.5 to 3% by mass, particularly 1 to 2% by mass with respect to the total amount of the polycarbonate resin composition. It is particularly preferable that the amount of the carbon dioxide foaming agent is 1.8 parts by mass or less with respect to a total of 100 parts by mass of the linear polycarbonate and the branched polycarbonate. By setting the content of the foaming agent within the above numerical range, the polycarbonate resin composition has good gas dispersibility and can improve the foamability of the resin composition.

Carbon dioxide used as a foaming agent may be in either a gas state or a liquid state. Considering solubility, permeability, diffusivity, and the like, in the polycarbonate resin composition, it is preferable to use carbon dioxide in a supercritical state at the critical temperature or higher and critical pressure or higher.

(iii) Cooling step (optional step)

The polycarbonate resin composition kneaded with a foaming agent is then subjected to extrusion foaming step [step 2], during which cooling step is preferably added as desired. In this optional cooling step, the polycarbonate resin composition kneaded with the foaming agent is transferred to an extruder (second extruder) having a temperature that is lower than the extruder used for kneading (first extruder) and cooled. Herein, although not limited to, for example, the temperature inside the first extruder may be set to 240 to 320°C and particularly 260 to 300°C, and the cooling inside the second extruder may be carried out at 180 to 220°C and particularly 185 to 210°C. In particular, by setting the cooling temperature in the second extruder within the above numerical range, it becomes easy to increase the foaming ratio of polycarbonate-based foamed particles and reduce the open cell ratio.

(iv) Extrusion foaming step [step 2]

In the extrusion foaming step [step 2], the polycarbonate resin composition kneaded with the foaming agent is extruded and foamed in an atmosphere at a lower pressure than in the extruder. Since a pressure in the extruder is, for example, about 5 to 20 MPa, and usually about 10 to 18 MPa, by extruding from the extrusion port (dies or die) to the outside of the extruder, for example, in air or water, the polycarbonate resin composition is exposed to a lower pressure atmosphere than the extruder and foams.
Herein, when the polycarbonate resin composition is extruded into the air, cooling of the polycarbonate resin composition proceeds relatively slowly in the subsequent granulating step [step 3], so that it can be sufficiently foamed. Therefore, in the extrusion foaming step [step 2], it is preferable to extrude the polycarbonate resin composition from an extruder into the air. Note that the temperature of the polycarbonate resin composition in the extrusion foaming step [step 2] is preferably 200°C or less. Furthermore, the temperature of the dies at the time is preferably about 180 to 220°C, and particularly about 185 to 210°C.

(v) Granulating step [step 3]

In the granulating step [step 3], the extruded polycarbonate resin composition is cut to granulate polycarbonate-based foamed particles. The granulating step [step 3] can be carried out in the same environment (in air or water) as in the extrusion foaming step [step 2] mentioned above, or in a different environment (in air or water), and can be divided into the following three methods depending on the difference in extruding environments. In other words, the three methods are the underwater cut (hereinafter, also referred to as UWC) method, the watering cut (hereinafter, also referred to as WRC) method, and the hot cut (hereinafter, also referred to as HC) method.
The UWC method is a method in which a chamber attached to the tip of a die is filled with cooling water adjusted to a predetermined pressure so as to be in contact with the resin discharge surface of the die, and the composition extruded from the holes of the die is cut underwater. Furthermore, in the WRC method, a cooling drum in which cooling water flows along the inner peripheral surface of the cooling drum connected to the die is disposed downstream from the die, and the composition cut by the cutter is cooled in the cooling water while foaming in air or after foaming. The HC method is a method in which a composition is cut with a cutter in the air, and the cut composition is cooled in the air during or after foaming. Among these, the HC method and WRC method, which perform granulation in the air, are preferred.

<Molded product of polycarbonate-based foam >

The polycarbonate-based foamed particle of this embodiment can be processed into a molded product of polycarbonate-based foam. The present invention also includes a molded product of polycarbonate-based foam obtained by molding any one of the above-mentioned polycarbonate-based foamed particles.
The methods for processing the polycarbonate-based foam molded product from the polycarbonate-based foamed particles of this embodiment include a so-called bead method in-mold foam molding method in which the polycarbonate-based foamed particles are prepared in a pressure-resistant container, and the temperature is raised to form the polycarbonate-based foamed particles in the mold, but the method is not limited thereto.
Polycarbonate-based foam molded products can be used as industrial cushioning materials, cold packs, and the like, in addition to heat insulation materials for homes and automobiles. Polycarbonate-based foam molded products are excellent in heat resistance, and are suitable for heat insulating materials, sound insulating materials, cushioning materials, and the like, around automobile engines and factory piping. Polycarbonate-based foam molded products are also excellent in mechanical property, and are useful as heat insulating materials for pipelines, LNG refrigerated ships, and the like.

EXAMPLES

Next, in order to further clarify the effects of the present invention, Examples and Comparative Examples will be described, but the present invention is not limited to these Examples.

<Production of Examples and Comparative Examples>

In the following Examples and Comparative Examples, the below-mentioned raw materials were used.

[Polycarbonate (PC)]

- Linear PC-1: Iupilon® H-4000 manufactured by Mitsubishi Engineering Plastics Co., Ltd., MFR (300°C, 1.2 kgf): 63 g/10 min, load deflection temperature (1.8 MPa): 123°C, glass transition temperature: 143.4°C; viscosity average molecular weight is estimated to be about 13000 from the viscosity characteristics.
- Linear PC-2: Iupilon® H-3000 manufactured by Mitsubishi Engineering Plastics Co., Ltd., MFR (300°C, 1.2 kgf): 30 g/10 min, load deflection temperature (1.8 MPa): 123°C, glass transition temperature: 146.2°C; viscosity average molecular weight is estimated to be about 18000 from the viscosity characteristics.
- Branched PC: Novarex® M7020U manufactured by Mitsubishi Engineering Plastics Co., Ltd., MFR (300°C, 1.2kgf): 3.2 g/10 minutes, load deflection temperature (1.8 MPa): 128°C, Glass transition temperature: 147.6°C; viscosity average molecular weight is estimated to be about 30000 from the viscosity characteristics.

<Measurement>

The glass transition temperature of the polycarbonate resin described above and the characteristics of the polycarbonate-based foamed particles in each Example and Comparative Example were measured as follows.

- Glass transition temperature: Measured by differential scanning calorimetry (DSC) in accordance with JIS K7121: 2012 (ISO 3146: 2000).
- Average cell diameter: A polycarbonate-based foamed particle sample was cut using a razor at a perpendicular bisector to the long axis diameter, and an enlarged photograph of the cross section was taken using DIGITAL MICROSCOPE manufactured by Keyence Corporation. The magnification of the enlarged photograph was 100x. Within a range of 1000 um from the center point of the cross section, the number C of cells existing within a 1000 $\mu$m $\times$ 1000 um square area was counted, and the average cell diameter was calculated from the number of cells based on the above formula (1).
- Open cell ratio: Calculated using the above formula (2) in accordance with the method described in ASTM D2856-87 Procedure C (PROSEDURE C). As the air comparison pycnometer, Model 1000 manufactured by Tokyo Science Co., Ltd. was used.
- Foaming ratio: the density $d_1$ (g/L) and apparent density $d_2$ (g/L) of the polycarbonate resin composition were measured and calculated using the above Formula (3).
- Bulk density: Polycarbonate-based foamed particles were placed into a measuring cup of about 1 L with internal volume Vk (L) accurately measured in advance until the polycarbonate-based foamed particles overflowed from the measuring cup container. Next, the powder surface (upper end) of the container was scraped, and the weight Wb (g) of the polycarbonate-based foamed particles in the container was measured. Then, the bulk density of the foamed particles was calculated using the following formula:

Bulk density $d_3$ (g/L) = weight of foamed particles Wb (g) / inner volume of measuring cup Vk (L).

[Example 1]

A mixture of the above-mentioned linear PC-1 and branched PC at a mass ratio of 85:15 was poured from a hopper to a first twin-screw extruder (manufactured by Technovel, screw diameter: 15 mm, L/D = 30) at a rate of 0.6 kg/hour) and kneaded at 260°C to prepare a polycarbonate resin composition. Carbon dioxide (carbon dioxide gas) as the foaming agent was injected into a molten polycarbonate resin composition from the injection part provided in the middle of the first extruder, in an amount of 1.7 parts by mass with respect to a total of 100 parts by mass of linear PC-1 and branched PC.

Furthermore, the kneaded product was allowed to pass through a melt cooler connected to the tip of the twin-screw extruder and set at 195°C to be cooled, and then extruded from a die with a diameter of 1.2 mm attached to the tip end of the melt cooler into the air and foamed, and cut at a cutter rotation speed of 600 rpm, then cooled in the air, and granulated, thereby producing the polycarbonate-based foamed particles of Example 1. Note here that a dies temperature at this time was set to 192°C.

The obtained polycarbonate-based foamed particles were evaluated for the average cell diameter, the open cell ratio, and the foaming ratio, and the results together with the compositions of polycarbonate resin composition are shown in Table 1 below.

[Examples 2 to 3, and Comparative Examples 1 to 2]

Polycarbonate-based foamed particles were produced and evaluated by the same procedures as in Example 1 except that the types and amounts of raw materials used were changed as shown in Table 1 below. Evaluation results are shown in Table 1.

[Table 1]

| Example | | Comparative Example 1 | Example 1 | Example 2 | Example 3 | Comparative Example 2 |
|---|---|---|---|---|---|---|
| Composition* | Linear PC-1 | 100 | 85 | 80 | 70 | - |
| | Linear PC-2 | - | - | - | - | 100 |
| | Branched PC | - | 15 | 20 | 30 | - |
| Foamed particles | Average cell diameter (μm) | 909 | 833 | 870 | 769 | 303 |
| | Open cell ratio (%) | 0.8 | 0.8 | 0.5 | 1.9 | 78.9 |
| | Foaming ratio (time) | 3.7 | 5.0 | 6.3 | 4.8 | 4.9 |
| | Bulk density (g/L) | 226 | 167 | 133 | 175 | 169 |
| * Unit: part by mass | | | | | | |

In the polycarbonate-based foamed particles of Examples 1 to 3 according to the present invention, the average cell diameter was all more than 700 μm, and the open cell ratio was less than 2%, indicating that many large-sized closed cells were generated. In addition, in all Examples, the foaming ratio was good such as 4 times or more. Particularly in Example 2 in which 80 parts by mass of high MFR linear polycarbonate and 20 parts by mass of branched polycarbonate were used, polycarbonate-based foamed particles having closed cells with a large cell diameter and a high foaming ratio were obtained.

On the other hand, in Comparative Example 1 in which only linear polycarbonate was used, the foaming ratio was less than 4 times. It was shown that using only linear PC-1 with high MFR (low viscosity) resulted in low melt tension and insufficient foaming. In Comparative Example 2 using linear PC-2 with low MFR (high viscosity), the foaming ratio was good, but the resulting cell diameter was small and the open cell ratio was extremely high. It was shown that simply using a high viscosity resin to increase the foaming ratio does not necessarily result in closed cells with a large cell diameter.

Note that when the cell shape of the polycarbonate-based foamed particles of Example 3 was evaluated, the cell shape was found to be approximately spherical. It has been revealed that according to the present invention, polycarbonate-based foamed particles that are substantially spherical, have a large average cell diameter, and have a low open cell ratio can be obtained at a high foaming ratio.

## Claims

1. Polycarbonate-based foamed particles comprising at least a polycarbonate resin composition, wherein

an average cell diameter is more than 300 μm and 1000 μm or less,
an open cell ratio is 0.1% or more and 30% or less,
the polycarbonate resin composition includes a linear polycarbonate and a branched polycarbonate, and
a content of the linear polycarbonate in the polycarbonate resin composition is 60 parts by mass or more and 95 parts by mass or less with respect to a total of 100 parts by mass of the linear polycarbonate and the branched polycarbonate.

2. The polycarbonate-based foamed particles according to claim 1, wherein the polycarbonate resin composition further comprises one or more cell nucleating agents selected from the group consisting of talc, clay, and silica, or not comprising a cell nucleating agent,
wherein a content of the cell nucleating agent is less than 0.1 parts by mass with respect to a total of 100 parts by mass of the linear polycarbonate and the branched polycarbonate.

3. The polycarbonate-based foamed particles according to claim 1 or claim 2, wherein a foaming ratio is 4 times or more and 10 times or less.

4. The polycarbonate-based foamed particles according to any one of claim 1 to claim 3, wherein the average cell diameter is 700 to 900 $\mu$m.

5. The polycarbonate-based foamed particles according to any one of claim 1 to claim 4, wherein the open cell ratio is 0.1% or more and 10% or less.

6. The polycarbonate-based foamed particles according to any one of claim 1 to claim 5, wherein a content of the linear polycarbonate in the polycarbonate resin composition is 65 to 92 parts by mass with respect to a total of 100 parts by mass of the linear polycarbonate and the branched polycarbonate.

7. The polycarbonate-based foamed particles according to any one of claim 1 to claim 6, wherein a viscosity-average molecular weight of the linear polycarbonate is 5000 to 30000, and a viscosity-average molecular weight of the branched polycarbonate is 10000 to 50000.

8. The polycarbonate-based foamed particles according to any one of claim 1 to claim 7, wherein a melt flow rate (MFR) (300°C, 1.2 kgf) of the linear polycarbonate is 40 g/10 min or more and 70 g/10 min or less.

9. The polycarbonate-based foamed particles according to any one of claim 1 to claim 8, wherein a melt flow rate (MFR) (300°C, 1.2 kgf) of the branched polycarbonate is 10 g/10 min or less.

10. The polycarbonate-based foamed particles according to any one of claim 1 to claim 9, wherein a melt flow rate (MFR) (300°C, 1.2 kgf) of the linear polycarbonate is 52 to 70 g/10 min, and a melt flow rate (MFR) (300°C, 1.2 kgf) of the branched polycarbonate is 1 to 10 g/10 min.

11. The polycarbonate-based foamed particles according to any one of claim 1 to claim 10, wherein the linear polycarbonate is a linear aromatic polycarbonate, and the branched polycarbonate is a branched aromatic polycarbonate.

12. The polycarbonate-based foamed particles according to any one of claim 1 to claim 11, wherein the polycarbonate-based foamed particles have a bulk density of 80 g/L to 300 g/L.

13. A method for producing the polycarbonate-based foamed particles according to any one of claim 1 to claim 12, the method comprising at least:

a foaming agent-kneading step including kneading a foaming agent into the polycarbonate resin composition in an extruder;
an extrusion foaming step including extruding and foaming the polycarbonate resin composition kneaded with the foaming agent in an atmosphere at a lower pressure than in the extruder; and
a granulating step including cutting the extruded polycarbonate resin composition to granulate the polycarbonate-based foamed particles.

14. The method according to claim 13, wherein the foaming agent is carbon dioxide, an amount of the foaming agent is 1.8 parts by mass or less with respect to a total of 100 parts by mass of the linear polycarbonate and the branched polycarbonate, and a temperature of the polycarbonate resin composition in the extrusion foaming step is 200°C or less.

15. A molded product of polycarbonate-based foam, formed by molding the polycarbonate-based foamed particles according to any one of claim 1 to claim 12.

## INTERNATIONAL SEARCH REPORT

| | International application No. |
|---|---|
| | **PCT/JP2023/008750** |

### A. CLASSIFICATION OF SUBJECT MATTER

***C08J 9/16***(2006.01)i
FI: C08J9/16 CFD

According to International Patent Classification (IPC) or to both national classification and IPC

### B. FIELDS SEARCHED

Minimum documentation searched (classification system followed by classification symbols)

C08J9/00-9/42; B29C44/00-44/60; B29C67/20; C08G63/00-64/42; C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-155609 A (SEKISUI PLASTICS CO., LTD.) 07 October 2021 (2021-10-07) whole document, in particular, claims, examples | 1-15 |
| A | JP 2020-164581 A (SEKISUI PLASTICS CO., LTD.) 08 October 2020 (2020-10-08) whole document, in particular, claims, paragraphs [0015], [0059]-[0072] | 1-15 |
| A | JP 2021-054959 A (SEKISUI PLASTICS CO., LTD.) 08 April 2021 (2021-04-08) whole document, in particular, claims, paragraphs [0024], [0050], [0053]-[0059] | 1-15 |
| A | JP 10-237292 A (IDEMITSU PETROCHEMICAL CO., LTD.) 08 September 1998 (1998-09-08) whole document, in particular, claims, example 4 | 1-15 |
| A | JP 8-252851 A (JSP CORP.) 01 October 1996 (1996-10-01) whole document, in particular, claims, examples | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 May 2023** | **30 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

17

**INTERNATIONAL SEARCH REPORT**
**Information on patent family members**

International application No.

**PCT/JP2023/008750**

| Patent document cited in search report | | | Publication date (day/month/year) | Patent family member(s) | Publication date (day/month/year) |
|---|---|---|---|---|---|
| JP | 2021-155609 | A | 07 October 2021 | (Family: none) | |
| JP | 2020-164581 | A | 08 October 2020 | US 2022/0010089 A1 whole document, in particular, claims, paragraphs [0068], [0155]-[0309] WO 2020/065485 A1 EP 3858906 A1 CN 112739755 A TW 202022031 A | |
| JP | 2021-054959 | A | 08 April 2021 | (Family: none) | |
| JP | 10-237292 | A | 08 September 1998 | (Family: none) | |
| JP | 8-252851 | A | 01 October 1996 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016188321 A
- JP 2021054959 A
- JP H10237292 A